(19) Europäisches Patentamt
European Patent Office
Office européen des brevets

(11) **EP 1 203 433 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(21) Anmeldenummer: **00958151.3**

(22) Anmeldetag: **18.07.2000**

(51) Int Cl.:
***H02H 3/33*** *(2006.01)*

(86) Internationale Anmeldenummer:
**PCT/DE2000/002333**

(87) Internationale Veröffentlichungsnummer:
**WO 2001/011746 (15.02.2001 Gazette 2001/07)**

(54) **FEHLERSTROMSCHUTZEINRICHTUNG FÜR BRANDSCHUTZ**

PROTECTIVE DEVICE AGAINST FAULT CURRENTS FOR PROTECTION AGAINST FIRE

DISPOSITIF DE PROTECTION CONTRE LES COURANTS DE DEFAUT POUR PROTECTION ANTI-INCENDIE

(84) Benannte Vertragsstaaten:
**AT BE CH CY DE DK ES FI FR GB GR IE IT LI LU MC NL PT SE**

(30) Priorität: **05.08.1999 DE 19937064**

(43) Veröffentlichungstag der Anmeldung:
**08.05.2002 Patentblatt 2002/19**

(73) Patentinhaber: **SIEMENS AKTIENGESELLSCHAFT**
**80333 München (DE)**

(72) Erfinder:
• **KLEEMEIER, Manfred**
**D-93073 Neutraubling (DE)**
• **SCHMID, Reinhard**
**D-93051 Regensburg (DE)**
• **SOLLEDER, Reinhard**
**D-93138 Lappersdorf (DE)**

(56) Entgegenhaltungen:
**DE-A- 19 634 438      DE-U- 29 705 187**

• **SOLLEDER: "Warum Fehlerstrom-Schutzschalter mit netzspannungsunabhängiger Auslösung?" ELEKTROTECHNISCHE ZEITSCHRIFT - ETZ., Bd. 107, Nr. 20, Oktober 1986 (1986-10), Seiten 938-945, XP002153372 VDE VERLAG GMBH. BERLIN., DE ISSN: 0948-7387 in der Anmeldung erwähnt**

EP 1 203 433 B1

**Beschreibung**

Die Erfindung bezieht sich auf eine Fehlerstromschutzeinrichtung, die mit einer Auslöseschaltung, zumindest mit den Funktionen "Erfassen eines Fehlerstroms" und "Auslösung zum Abschalten eines zu schützenden Netzes" arbeitet.

Einrichtungen zum Schutz gegen Fehlerströme können nach verschiedenartigen Funktionsprinzipien ausgebildet sein: Sie können netzspannungsunabhängig ausgebildet sein und werden dann in der Regel als Fehlerstromschutzschalter bezeichnet, sie können für die Auslösung Energie vom Netz benötigen und netzspannungsabhängig arbeiten. Diese werden in der Regel als Differenzstromschutzschalter bezeichnet. Beide Arten von Einrichtungen zum Schutz gegen Fehlerströme sollen hier unter der Bezeichnung Fehlerstromschutzeinrichtung zusammenfassend verstanden werden. Der Aufbau bekannter Fehlerstromschutzeinrichtungen ist beispielsweise aus "etz" (1986), Heft 20, Seiten 938 bis 945, bekannt. Dort sind in den Bildern 1 bis 3 Prinzipschaltbilder und Funktionsprinzipien eines netzspannungsunabhängigen FI-Schutzschalters und eines netzspannungsabhängigen DI-Schutzschalters dargestellt.

Fehlerstromschutzeinrichtungen sollen Schutz bei direktem Berühren eines Potential führenden Leiters gewährleisten und sie sollen Schutz bei indirektem Berühren sicherstellen, also Schutz bei Berühren eines leitenden Bauteils, zudem sich fehlerhaft eine Spannung gegen Erde aufgebaut hat.

Fehlerstromschutzeinrichtungen beider Art arbeiten in der Regel mit einem Summenstromwandler, in dem das Residuum der Ströme in hindurchgeführten zu schützenden Leitern gebildet wird. Im Fall eines Fehlerstroms wird in einer Sekundärwicklung ein Spannungssignal induziert, das ausgewertet wird und durch ein Auslöserelais über ein Schaltschloß zum Öffnen von Schaltkontakten in dem zu schützenden Netzteil führt. Das Auslöserelais einer Fehlerstromschutzeinrichtung ist dabei induktiv über den Summenstromwandler an das zu überwachende Netz angekoppelt. Bei einer Differenzstromschutzeinrichtung wird zusätzlich Netzenergie galvanisch in verstärkend wirkenden Schaltkreisen angekoppelt.

Das Auslöseverhalten von Fehlerstromschutzeinrichtungen ist u.a. von der Frequenz der Fehlerströme abhängig (DE-A-196 34 438). Hierbei sind die Beziehungen bekannt, wo Schutz vor Herzkammerflimmern gegeben ist und in welchen Bereichen es noch möglich ist, bei direktem Berühren einen Potential führenden Leiter loszulassen.

Der Erfindung liegt die Aufgabe zugrunde, eine Fehlerstromschutzeinrichtung zu entwickeln, die Schutz bei indirektem Berühren und auch Brandschutz gewährleistet.

Die Lösung der geschilderten Aufgabe erfolgt durch eine Fehlerstromschutzeinrichtung nach Anspruch 1. Hierbei ist die Auslöseschaltung darauf abgestimmt, den Auslösefehlerstrom, insbesondere bei Fehlerstromfrequenzen in der Auslöseschaltung, die außerhalb einer strengeren Grenzkurve für A für den Personenschutz bei indirektem Berühren liegen, unterhalb einer Auslösegrenzkurve B zum Brandschutz zu halten. Der Erfindung liegt eine Zusammenschau der Anforderungen für den Personenschutz und für den Brandschutz im Hinblick auf eine geeignete Fehlerstromschutzeinrichtung zugrunde. Für diese Zusammenschau besteht die Beziehung:

$$\frac{I_{Grenz}(f)}{I_{\Delta n}} = F(f) = B = const. \,,$$

wobei

$$I_{Grenz}(f) = \frac{W_{Brand}}{U_{Netz}} \,,$$

wobei

$I_{Grenz}(f)$    der bei der jeweiligen Frequenz zulässige Grenzfehlerstrom ist, bei dem noch keine Brandgefahr auftritt,

$I_{\Lambda n}$    der Auslösenennfehlerstrom bei Netzfrequenz zur Berücksichtigung des Personenschutzes ist,

$W_{Brand}$    die für den Brandschutz verlangte Leistungsgrenze in Watt,

$U_{Netz}$    die Netzspannung des zu schützenden Netzes ist und

$F(f)$    ein sogenannter Frequenzfaktor ist.

Hierbei wird die Auslösecharakteristik von Fehlerstromschutzeinrichtungen bei indirektem Berühren und in ihrer Frequenzabhängigkeit definiert.

Eine derartige Fehlerstromschutzeinrichtung trägt der zunehmenden Anzahl von Betriebsmitteln Rechnung, welche im Fehlerfall Fehlerströme von höherer Frequenz erzeugen. Solche Betriebsmittel sind beispielsweise Frequenzumrichter und Geräte mit getakteten Stromversorgungen.

Dem Personenschutz bei indirektem Berühren liegt die Überlegung zugrunde, daß zu einer Netzfrequenz ein Nennfehlerstrom zu einem maximal zulässigen Erdungswiderstand festgelegt ist. Dadurch wird in an sich bekannter Weise für den Schutz bei indirektem Berühren im Fehlerfall eine maximal zulässige Berührungsspannung gegen Erde sichergestellt. So ist beispielsweise bei einer Netzfrequenz von 50 oder 60 Hz die zulässige Berührungsspannung gegen Erde üblicherweise mit 50 V festgelegt. Danach darf in einem zu schützenden Netz ein maximaler Erdungswiderstand $R_{Erd}$ nicht überschritten werden, gemäß der Beziehung

$$R_{Erd} = \frac{U_{\max}}{I_{\Delta n}},$$

wobei

$U_{\max}$ die bei indirekter Berührung unschädliche maximale Spannung in Volt ist und

$I_{\Delta n}$ wieder der Auslösenennfehlerstrom bei Netzfrequenz ist gemäß der Grenzkurve A für den Personenschutz bei indirektem Berühren.

Es können in die Grenzkurve A auch andere bekannte Anforderungen zum Personenschutz anstelle dieser Beziehung berücksichtigt sein.

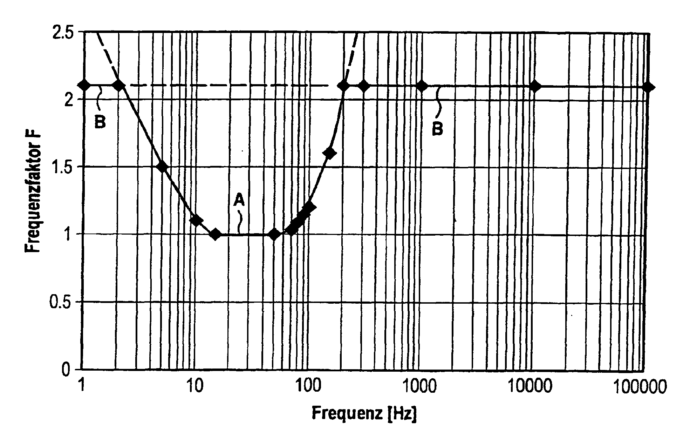

Die Erfindung soll nun anhand eines in der Zeichnung wiedergegebenen Diagramms näher erläutert werden:

In der Zeichnung ist auf der Abszisse die Frequenz von Fehlerströmen wiedergegeben, die in der Auslöseschaltung auftreten können. Auf der Ordinate ist ein Frequenzfaktor F aufgetragen. Dieser Frequenzfaktor ist der Quotient aus zulässigem Strom bei variabler Frequenz zum zulässigen Strom bei 50 bzw. 60 Hz. Eine Kurve A gibt im Ausführungsbeispiel die Funktion F(f) als Grenzkurve für Schutz bei indirekter Berührung wieder. Sicherheit besteht also für Werte, die im Diagramm auf der Grenzkurve A oder unterhalb dieser Grenzkurve liegen.

Die Grenzkurve B, eine Gerade, berücksichtigt den Brandschutz für Werte, die auf dieser Grenzkurve oder unterhalb dieser Grenzkurve liegen. Der Erfindung liegt hierbei die Erkenntnis zugrunde, daß zum Zünden eines Brandes eine elektrische Leistung größer als 150 W erforderlich ist. Noch strengerer Brandschutz geht von einer Leistungsgrenze von 100 W oder von gar 60 W aus. Der maximal zulässige Fehlerstrom ergibt sich zu

$$I_{Grenz}(f) = \frac{W_{Brand}}{U_{Netz}} .$$

Für beispielsweise $W_{Brand}$ zu 150 W ergibt sich sonach ein maximal zulässiger Strom unabhängig von der Frequenz zu $\frac{150W}{230V} = 0,652A$ oder 652 mA. Bei einem gewählten Nennfehlerstrom von 300 mA für eine Netzfrequenz in der Größenordnung von 50 oder 60 Hz ergibt sich somit $\frac{652mA}{300mA} = 2,173$ für den F-Faktor bzw. F(f).

Im Ausführungsbeispiel ist für die Kurve A eine maximale Berührungsspannung, $U_{\max}$, von 50 V und ein Nennfehlerstrom, $I_{\Delta n}$, von 300 mA zugrundegelegt, womit sich ein Erdungswiderstand, $R_{Erd}$, ergibt:

$$50 \ V/ \ 300 \ mA = 166,7 \ \Omega.$$

Weiter soll $\frac{I(f)}{I_{Netzfrequenz}} = F(f) = A$ sein, wobei

$I(f)$ der bei Frequenzen außerhalb der Netzfrequenz zulässige Körperstrom ist und

$I_{Netzfrequenz}$ der zulässige Körperstrom bei Netzfrequenz, jeweils für indirektes Berühren,

ist. Der F-Faktor kann aus der Kurve A nach Zeichnung entnommen werden oder aus einschlägigen Tabellen, auch für andere Anforderungen, ermittelt werden.

Im Ausführungsbeispiel ist ein Auslösenennfehlerstrom bei Netzfrequenz von 300 mA zugrundegelegt. Die Auswahl eines den Umständen entsprechenden Auslösenennfehlerstroms ist allgemein geläufig. So können Schwimmhallen und Baderäume einen Nennfehlerstrom von 30 oder von 10 mA erfordern.

Die geschilderte Fehlerstromschutzeinrichtung läßt sich auch in der Ausprägung als Überwachungsgerät oder als sogenanntes "Residual Monitoring Device" ausführen.

**Patentansprüche**

1. Fehlerstromschutzeinrichtung, die mit einer Auslöseschaltung, zumindest mit den Funktionen "Erfassen eines Fehlerstroms" und "Auslösen zum Abschalten eines zu schützenden Netzes" arbeitet, **dadurch gekennzeichnet, daß** die Auslöseschaltung darauf abgestimmt ist, den Auslösefehlerstrom insbesondere bei Fehlerstromfrequenzen, in der Auslöseschaltung, außerhalb einer strengeren Grenzkurve (A) für den Personenschutz bei indirektem Berühren unterhalb einer Auslösegrenzkurve (B) zum Brandschutz zu halten, wobei die Auslösegrenzkurve (B) der folgenden Beziehung genügt:

$$\frac{I_{Grenz}(f)}{I_{\Delta n}} = F(f) = B = const. ,$$

wobei

$$I_{Grenz}(f) = \frac{W_{Brand}}{U_{Netz}},$$

wobei

$I_{Grenz}(f)$ der bei der jeweiligen Frequenz zulässige Grenzfehlerstrom ist, bei dem noch keine Brandgefahr auftritt,

$I_{\Delta n}$ der Auslösenennfehlerstrom bei Netzfrequenz zur Berücksichtigung des Personenschutzes ist,

$W_{Brand}$ die für den Brandschutz verlangte Leistungsgrenze in Watt,

$U_{Netz}$ die Netzspannung des zu schützenden Netzes ist und

$F(f)$ ein sogenannter Frequenzfaktor ist.

2. Fehlerstromschutzeinrichtung nach Anspruch 1, **da-durch gekennzeichnet**, daß im zu schützenden Netz ein maximaler Erdungswiderstand ($R_{Erd}$) nicht überschritten ist, gemäß der Beziehung:

$$R_{Erd} = \frac{U_{max}}{I_{\Delta n}},$$

wobei

$U_{max}$ die bei indirekter Berührung unschädliche maximale Spannung in Volt ist und

$I_{\Delta n}$ wieder der Auslösenennfehlerstrom bei Netzfrequenz ist gemäß der Grenzkurve A für den Personenschutz bei indirektem Berühren,

und wobei der bei anderen Frequenzen bei indirektem Berühren zulässige, über den Körper fließende Strom, Körperstrom ($I(f)$), nicht überschritten wird, gemäß der Beziehung

$$\frac{I(f)}{I_{Netzfrequenz}} = F(f) = A,$$

wobei

$I_{Netzfrequenz}$ der zulässige Körperstrom bei Netzfrequenz ist.

**Claims**

1. Fault-current protective device, which operates with a tripping circuit having at least the functions "detection of a fault current" and "tripping in order to disconnect a network that is to be protected", **characterized in that** the tripping circuit is matched to keep the tripping fault current below a tripping limit curve (B) for fire protection, especially for fault current frequencies, in the tripping circuit, beyond a stricter limit curve (A) for protecting personnel against indirect contact, with the tripping limit curve (B) satisfying the following relationship:

$$\frac{I_{limit}(f)}{I_{\Delta n}} = F(f) = B = const.,$$

where

$$I_{limit}(f) = \frac{W_{fire}}{U_{network}},$$

where

$I_{limit}(f)$ is the maximum fault current limit, at which there is still no risk of fire, for the respective frequency,

$I_{\Delta n}$ is the rated tripping fault current at the network frequency, in order to take account of personnel protection,

$W_{fire}$ is the power limit, in watts, required for fire protection,

$U_{network}$ is the network voltage of the network to be protected, and

$F(f)$ is a so-called frequency factor.

2. Fault-current protective device according to Claim 1, **characterized in that** a maximum earth resistance ($R_{earth}$) is not exceeded in the network to be protected, in accordance with the relationship:

$$R_{earth} = \frac{U_{max}}{I_{\Delta n}},$$

where

$U_{max}$ is the maximum voltage involved which is not going to be dangerous for indirect contact, and

$I_{\Delta n}$ is once again the rated tripping fault current at the network frequency, in accordance with limit curve A, for protecting personnel against indirect contact,

and where the maximum permissible current, the body current ($I(f)$), flowing via the body at indirect contact at other frequencies is not exceeded, in accordance with the relationship

$$\frac{I(f)}{I_{network\ frequency}} = F(f) = A,$$

where
$I_{network\ frequency}$ is the maximum permissible body current at the network frequency.

## Revendications

1. Dispositif de protection contre les courants de défaut, fonctionnant avec un circuit de déclenchement présentant au moins les fonctions "détection d'un courant de défaut" et "déclenchement pour la mise à l'arrêt d'un réseau à protéger", **caractérisé en ce que** le circuit de déclenchement est adapté pour maintenir le courant de défaut de déclenchement, notamment pour des fréquences de courant de défaut dans le circuit de déclenchement, qui sont situées en-dehors d'une courbe limite (A) plus stricte pour la protection des personnes en cas de contact indirect par toucher, en-dessous d'une courbe limite de déclenchement (B) pour la protection contre l'incendie, la courbe limite de déclenchement (B) satisfaisant à la relation suivante :

$$\frac{I_{\lim ite}(f)}{I_{\Delta n}} = F(f) = B = const.,$$

avec

$$I_{\lim ite}(f) = \frac{W_{incendie}}{U_{réseau}},$$

$I_{\lim ite}(f)$ étant le courant de défaut limite admissible pour la fréquence respectivement considérée, et pour lequel il n'apparaît pas encore de risque d'incendie,
$I_{\Delta n}$ étant le courant de défaut de déclenchement pour la fréquence de réseau, destiné à la prise en compte de la protection des personnes,
$W_{incendie}$ étant la limite de puissance en Watts exigée pour la protection contre l'incendie,
$U_{réseau}$ étant la tension de réseau du réseau à protéger, et
$F(f)$ étant un facteur dit facteur de fréquence.

2. Dispositif de protection contre les courants de défaut selon la revendication 1, **caractérisé en ce que** dans le réseau à protéger, on ne dépasse pas une résistance de terre ($R_{terre}$) maximale, conformément à la relation :

$$R_{terre} = \frac{U_{max}}{I_{\Delta n}}$$

$U_{max}$ étant la tension maximale en Volt, non nocive en cas de contact indirect par toucher, et $I_{\Delta n}$ étant à nouveau le courant de défaut de déclenchement pour la fréquence de réseau, conformément à la courbe limite A pour la protection des personnes en cas de contact indirect par toucher,

et le courant qui circule à travers le corps humain, à savoir le courant corporel ($I(f)$), admissible pour les autres fréquences en cas de contact indirect par toucher, n'étant pas dépassé, conformément à la relation :

$$\frac{I(f)}{I_{fréquence\ de\ réseau}} = F(f) = A,$$

$I_{fréquence\ de\ réseau}$ étant le courant corporel admissible pour la fréquence du réseau.